# FASCICULE DE BREVET EUROPEEN

(11) **EP 0 548 829 B1**
(45) Date de publication et mention de la délivrance du brevet: **11.09.1996**
(21) Numéro de dépôt: 92121564.6
(22) Date de dépôt: 18.12.1992
(51) Int. Cl.: G01V 8/00, G08G 1/04

(54) **Procédé pour déterminer l'état d'occupation d'une portion de voie apte à être parcourue par des corps de toute nature**
Verfahren zur Bestimmung des Belegungszustandes einer Strecke, von Gegenständen beliebiger Art
Process for determining the occupation state of a path that can be crossed by any kind of object

(30) Priorité: 20.12.1991 FR 9115874
(43) Date de publication de la demande: 30.06.1993
(73) Titulaire: INSTITUT NATIONAL DE RECHERCHE SUR LES TRANSPORTS ET LEUR SECURITE, F-94110 Arcueil (FR)
(72) Inventeur: Motyka, Vincent, F-92160 Antony (FR); Blosseville, Jean-Marc, F-92140 Clamart (FR); Lenoir, François, F-94210 La Varenne (FR)
(74) Mandataire: Flavenot, Bernard

(56) Documents cités:
- WO-A-88/06326
- FR-A- 2 204 841
- FR-A- 2 613 957
- US-A- 4 736 097
- US-A- 4 839 648
- IBM TECHNICAL DISCLOSURE BULLETIN. vol. 24, no. 1B, Juin 1981, NEW YORK US pages 672 - 673 K.E. POWELL 'field disturbance sensor auto level control'

## Description

La présente invention concerne les procédés pour déterminer ou contrôler l'état d'occupation d'une portion de voie apte à être parcourue par des corps de toute nature et illuminée par une source de lumière naturelle ou artificielle, notamment pour déterminer s'il y a présence ou non d'un corps, ces procédés trouvant une application particulièrement avantageuse, par exemple pour le contrôle de l'état d'occupation d'une voie par des véhicules automobiles, d'un tapis roulant transportant des objets comme des bouteilles, boîtes, etc., d'un passage piétonnier apte à être emprunté par des personnes, etc.

On connaît déjà des procédés qui permettent de contrôler l'état d'occupation d'une voie, par exemple la densité du trafic automobile sur une voie de circulation, notamment ceux qui sont décrits dans les Brevets US-A-3 436 540, US-A-3 840 848 et FR-A-2 523 341.

Ces procédés donnent de bons résultats mais sont plus particulièrement adaptés pour la détermination de l'état d'occupation d'une voie en tenant compte d'un nombre important de paramètres. Ils demandent donc tous un investissement important.

La présente invention a ainsi pour but de mettre en oeuvre un procédé pour déterminer l'état d'occupation d'une portion de voie apte à être parcourue par des corps de toute nature et illuminée par une source de lumière, qui puisse être très facilement mis en oeuvre et s'appliquer à de nombreux domaines.

Plus précisément, la présente invention a pour objet un procédé pour déterminer l'état d'occupation d'une portion de voie apte à être parcourue par des corps de toute nature et illuminée par une source de lumière, ladite portion de voie comportant au moins deux points objets définissant une droite sensiblement perpendiculaire à la direction de déplacement desdits corps sur ladite portion de voie, les deux dits points objets étant séparés par une distance inférieure à la largeur desdits corps et présentant entre eux une différence de luminosité, ledit procédé étant caractérisé par le fait qu'il consiste :
à former une image de ladite portion de voie dans un plan situé à un niveau supérieur à celui du point le plus haut de l'un desdits corps aptes à se déplacer sur ladite portion de voie,
à identifier, dans l'image de ladite portion de voie, les points images des deux dits points objets, et
à comparer l'intensité lumineuse reçue sur les deux dits points images, une différence de luminosité non nulle correspondant à une présomption d'absence d'un corps sur ladite portion de voie, une différence de luminosité sensiblement nulle correspondant à une présomption de présence d'un corps sur ladite portion de voie, entre lesdits points objets et points images.

Selon une autre caractéristique de la présente invention, l'identification, dans l'image de ladite portion de voie, des images des deux dits points objets, quand ladite portion de voie comporte deux zones de points de luminosité différente et que lesdits deux points objets appartiennent respectivement à ces deux dites zones, est obtenue en déterminant la ligne image de ladite droite définie par les deux dits points objets, à comparer la quantité de lumière reçue par un premier point image de cettedite ligne image avec celle reçue par au moins un deuxième point image de cette même ligne, la distance séparant ces deux premier et deuxième points images étant inférieure à la largeur de l'image dudit corps, et à répéter cette comparaison autant de fois qu'il est nécessaire pour trouver au moins deux points images présentant entre eux une différence de luminosité.

Selon une autre caractéristique de la présente invention, le procédé consiste en outre à comparer, dans la ligne image de ladite droite définie par les deux dits points objets, la quantité de lumière reçue par ledit premier point image avec celle reçue par un troisième point image, lesdits deuxième et troisième points images encadrant ledit premier point image, et à répéter cette comparaison autant de fois qu'il est nécessaire pour trouver au moins un point-milieu image encadré de deux points images et présentant, avec chacun de ces deux points images, une différence de luminosité.

Selon une autre caractéristique de la présente invention, le procédé consiste à déterminer plusieurs ensembles d'au moins deux points images, chaque ensemble appartenant à la ligne image d'une droite définie par deux points objets et la distance séparant les deux lignes images extrêmes étant inférieure à la longueur de l'image des corps ayant, suivant ladite direction de déplacement, une longueur minimale pour les corps aptes à se déplacer sur ladite portion de voie.

D'autres caractéristiques et avantages de la présente invention apparaîtront au cours de la description suivante donnée en regard des dessins annexés à titre illustratif, mais nullement limitatif, dans lesquels :

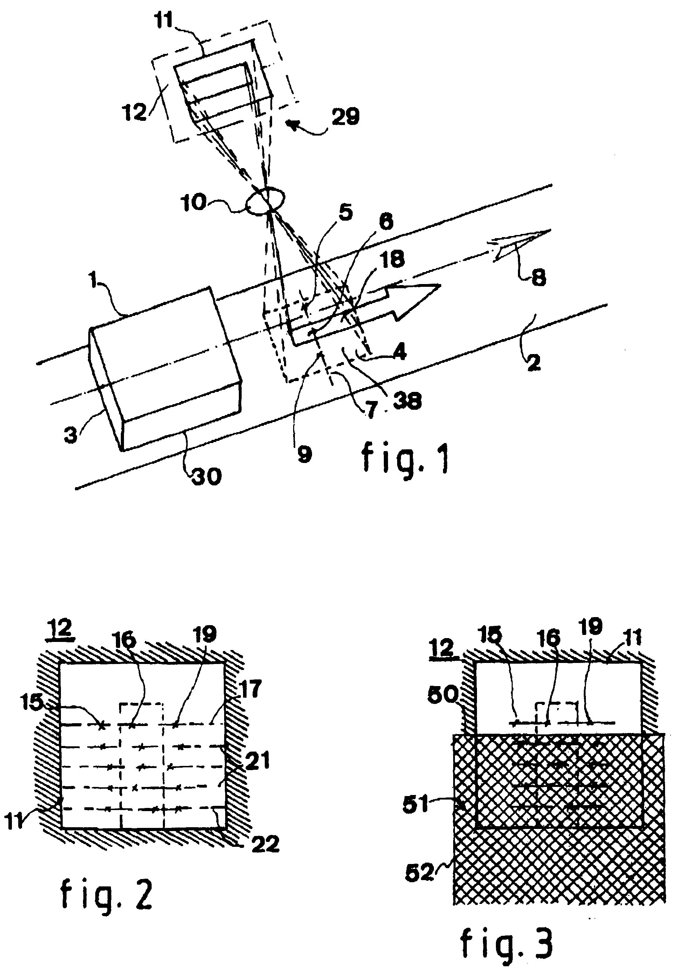

La figure 1 représente le schéma de principe de la mise en oeuvre du procédé selon l'invention, et
Les figures 2 et 3 représentent des diagrammes permettant d'expliciter le procédé selon l'invention.

Pour la mise en oeuvre du procédé et son explication dans la présente description, il est supposé qu'un corps 1 parcourt une voie 2, la largeur 3 du corps étant inférieure, mais très proche, de la largeur de la voie. Tel peut être le cas, par exemple, d'une voiture automobile empruntant une voie de circulation, une personne marchant dans un couloir ou sur un tapis roulant, comme dans une gare pour arriver sur le quai, ou encore des objets comme des bouteilles ou analogues se translatant sur des bandes de distribution.

Il est en plus supposé que, dans son déplacement sur la voie 2, le corps 1 emprunte la portion 4 de cette voie, dont il faut déterminer l'état d'occupation à un instant donné. Pour la mise en oeuvre du procédé, cette portion de voie 4 comporte au moins deux points objets 5, 6 - 6, 9 définissant une droite 7 sensiblement perpendiculaire à la direction de déplacement 8 du corps 1 et présentant entre eux une différence de luminosité lorsqu'ils sont illuminés par une source de lumière naturelle ou artificielle.

Dans la pratique, cette différence de luminosité sera bien sûr la plus importante possible. Pour ce faire, ou bien la portion de voie 4 comporte naturellement ces deux points objets 5, 6, ou bien ces deux points objets seront créés artificiellement. On peut par exemple rapporter sur la portion de voie 4 une bande définissant dans cette portion de voie 4 une zone 18 d'une luminosité totalement différente de celle 38 du reste de la portion de voie, par exemple une portion de bande blanche sur une chaussée grise ou noire, du même type que celles qui matérialisent le bord des routes. La bande 18 peut par exemple être constituée par une flèche qui, de façon connue, indique le sens de circulation des corps sur la voie 2 et qui est généralement disposée au milieu de cette voie.

En outre, au-dessus de la portion de voie 4 dont il doit être déterminé l'état d'occupation, sont disposés des moyens permettant de former une image 11 de cette portion de voie, et donc aussi une image 51 du corps 1 lors de son passage sur la portion de voie. Ces moyens sont par exemple constitués par une caméra vidéo schématiquement illustrée en 29 et comportant un objectif 10 situé dans un plan à un niveau supérieur à celui du point le plus haut, par rapport au niveau de la portion de voie 4, d'un corps 1 apte à se déplacer sur cette portion de voie. La cible 12 de cette caméra, sur laquelle est formée l'image 11 de la portion de voie 4, est constituée, de façon connue en elle-même, d'une matrice comportant une pluralité de points ou pixels parfaitement adressés dans le plan de cette matrice et pouvant donc être parfaitement lus, par exemple au moyen d'un ordinateur programmé à cet effet sans difficulté particulière pour un homme de l'art.

Lorsque la caméra 29 fonctionne, les points objets 5, 6, 9 donnent respectivement naissance aux points images 15, 16, 19 et la quantité de lumière reçue par ces points images est proportionnelle à la quantité de lumière émise par les points objets correspondants.

Lorsqu'une image 11 de la portion de voie 4 est formée sur la cible 12 de la caméra 29, on identifie, dans cette image, les deux points images 15, 16 correspondant aux deux points objets 5, 6.

Selon une caractéristique avantageuse, cette identification est obtenue en sélectionnant, dans l'image 11 de la portion de voie 4 lorsqu'il n'y a pas de corps 1 sur cette portion de voie, au moins une ligne 17 image d'une droite 7 définie par deux points objets 5, 6, ceci étant facilement obtenu en disposant la caméra vidéo de façon que les lignes de lecture de la cible soient elles-mêmes perpendiculaires à cette direction de déplacement 8 du corps 1.

Quand une ligne 17 est sélectionnée, on compare la quantité de lumière reçue par un point 16 de cette ligne image avec celle reçue par au moins un autre point 15 de la même ligne, et avantageusement par deux points 15, 19 l'encadrant et séparés l'un de l'autre d'une distance légèrement supérieure à la largeur de la partie 20 de l'image 11 qui présente une luminosité très différente de celle du reste de l'image, mais inférieure à la largeur 50 de l'image 51 du corps sur la cible de la caméra.

Il suffit de répéter cette comparaison autant de fois qu'il est nécessaire pour trouver, sur la ligne image 17, au moins un pixel 16 encadré de deux pixels 15, 19 et ayant une luminosité différente de ces pixels.

Bien entendu, dans la fonction première de cette invention comme mentionnée ci-dessus, il ne pourrait être déterminé que deux points images 15, 16. Cependant, pour améliorer la précision de la détermination de l'état d'occupation de la portion de voie 4, et notamment éliminer les objets ayant une trop petite largeur 3 définie suivant les droites perpendiculaires à la direction de déplacement 8 du corps 1 sur la voie 2, il est avantageux d'en déterminer trois 15, 16, 19 comme décrit ci-dessus, parmi lesquels le point-milieu 16 est susceptible d'avoir une luminosité très différente de celle des deux points l'encadrant.

Toujours pour améliorer la précision de la détermination de l'état d'occupation de la portion de voie 4, mais dans ce cas pour éliminer les objets de trop petite dimension en longueur 30 définie suivant la direction de déplacement 8 des corps 1, il est avantageux de déterminer plusieurs ensembles de trois points images sur des lignes images 17, ..., 21, 22, la distance séparant les deux lignes images extrêmes 17, 22 utilisées étant par exemple légèrement inférieure à la longueur 52 de l'image 51, sur la cible 12, des corps ayant, suivant la direction de déplacement, une longueur minimale pour les corps 1 aptes à se déplacer sur la portion de voie 4.

Quand les points images ont été identifiés, ce qui est très facile par une programmation adaptée de l'ordinateur, il est possible alors de déterminer s'il y a présence, ou non, d'un corps 1 sur la portion de voie 4, entre les points objets et les points images.

En effet, lorsqu'un corps 1 recouvre deux points objets 5, 6 de la portion de voie présentant entre eux une différence de luminosité importante, l'analyse des points images 15, 16 correspondants situés sur une même ligne de lecture 17 de l'image 11 ne fait pas apparaître une différence de luminosité entre ces deux points images, car les corps 1 qui passent sur les points objets 5, 6 sont généralement de couleur uniforme, surtout sur une portion de leur surface relativement petite par rapport à leur surface totale, vue par la caméra vidéo.

Réciproquement, si la différence de luminosité des deux points images 15, 16 est sensiblement nulle, ou du moins très inférieure à celle de ces deux points images lorsqu'il n'y a pas de corps 1 sur la portion de voie 4, on peut présumer qu'il y a un corps 1 sur la portion de voie 4, entre ces points images et les points objets.

La comparaison de la luminosité de deux points images sur une même ligne de lecture, sur la cible 12 de la caméra 29, dans l'image 11 de la portion de voie 4, permet donc de présumer la présence, ou non, d'un corps 1 entre la caméra vidéo et la portion de voie.

En effectuant plusieurs comparaisons comme décrit ci-avant, pour des ensembles de trois points images 15, 16, 19 situés sur plusieurs lignes images 17, ..., 21, 22, il est possible d'éliminer, dans l'ensemble des informations reçues par la cible de la caméra, celles relatives à des corps parasites passant entre la caméra et la surface de la portion de voie 4, et donc de conclure avec une quasi-certitude à la présence, ou non, d'un corps 1 sur la portion de voie 4.

A la lecture de la description ci-dessus, on peut constater que le procédé selon l'invention est très simple et qu'il peut être mis en oeuvre très facilement. Il est de plus évident qu'il peut trouver de nombreuses applications, notamment celles évoquées au début de la présente description. En particulier, il a été expérimenté par le Demandeur pour le comptage des véhicules automobiles sur une portion de voie donnée et les résultats obtenus ont été très satisfaisants puisque le pourcentage d'erreurs fut inférieur à un pour cent.

## Revendications

1. Procédé pour déterminer l'état d'occupation d'une portion de voie (4) apte à être parcourue par des corps (1) de toute nature et illuminée par une source de lumière, caractérisé par le fait que, ladite portion de voie comportant au moins deux points objets (5, 6) définissant une droite (7) sensiblement perpendiculaire à la direction (8) de déplacement desdits corps sur ladite portion de voie, les deux dits point objets étant séparés par une distance inférieure à la largeur desdits corps et présentant entre eux une différence de luminosité, il consiste:
à former une image (11) de ladite portion de voie (4) dans un plan situé à un niveau supérieur à celui du point le plus haut de l'un desdits corps aptes à se déplacer sur ladite portion de voie,
à identifier, dans l'image (11) de ladite portion de voie, les points images (15, 16) des deux dits points objets quand il n'y a pas de corps (1) sur ladite portion de voie (4) , et
à comparer l'intensité lumineuse reçue sur les deux dits points images (15, 16), une différence de luminosité non nulle correspondant à une présomption de l'absence d'un corps (1) sur ladite portion de voie (4), une différence de luminosité sensiblement nulle correspondant à une présomption de la présence d'un corps sur ladite portion de voie, entre lesdits points objets et points images.

2. Procédé selon la revendication 1, caractérisé par le fait que l'identification, dans l'image (11) de ladite portion de voie (4), des images des deux dits points objets (5, 6), quand ladite portion de voie (4) comporte deux zones de points (18, 38) présentant une luminosité différente et quand lesdits deux points objets (5, 6) appartiennent respectivement à ces deux dites zones, est obtenue en déterminant la ligne (17) image de ladite droite (7) définie par les deux dits points objets quand il n'y a pas de corps (1) sur ladite portion de voie (4), à comparer la quantité de lumière reçue par un premier point image (16) de cettedite ligne image avec celle reçue par au moins un deuxième point image (15) de cette même ligne, la distance séparant ces deux premier et deuxième points images étant inférieure à la largeur (50) de l'image (51) d'un dit corps, et à répéter cette comparaison autant de fois qu'il est nécessaire pour trouver au moins deux points images (15, 16) présentant une différence de luminosité.

3. Procédé selon la revendication 2, caractérisé par le fait qu'il consiste en outre, sur ladite ligne image (17) de ladite droite (7), à comparer la quantité de lumière reçue par le premier point image (16) de cettedite ligne image avec celle reçue par un troisième point image (19) de la même ligne, lesdits deuxième (15) et troisième (19) points images encadrant ledit premier point image (16), et à répéter cette comparaison autant de fois qu'il est nécessaire pour trouver au moins un point-milieu image (16) encadré de deux points images (15, 19) et présentant une luminosité différente de celle de ces deux points images l'encadrant.

4. Procédé selon l'une des revendications 2 et 3, caractérisé par le fait qu'il consiste à déterminer plusieurs ensembles d'au moins deux points images, chaque ensemble appartenant à la ligne image (17, 21, 22) d'une dite droite (7) définie par deux points objets et la distance séparant les deux lignes images extrêmes (17, 22) étant inférieure à la longueur (52) de l'image (51) des corps ayant, suivant ladite direction de déplacement, une longueur (30) minimale pour les corps aptes à se déplacer sur ladite portion de voie (4).

5. Procédé selon l'une des revendications 2 à 4, caractérisé par le fait qu'il consiste à former une image de ladite portion de voie (4) sur la cible (12) d'une caméra vidéo (29).

## Patentansprüche

1. Verfahren zur Bestimmung des Belegungszustandes eines Streckenabschnitts (4), der von Körpern (1) beliebiger Art durchlaufen werden kann, und welcher von einer Lichtquelle beleuchtet wird, dadurch gekennzeichnet, daß, wobei der Streckenabschnitt wenigstens zwei Objektpunkte (5, 6) aufweist, die eine zur Bewegungsrichtung (8) der Körper auf dem Streckenabschnitt im wesentlichen senkrechte Gerade (7) definieren, und die beiden Objektpunkte durch einen geringeren Abstand als die Breite der Körper getrennt sind und untereinander einen Unterschied in der Helligkeit aufweisen, es darin besteht:
ein Abbild (11) des Streckenabschnitts (4) in einer Ebene zu erzeugen, die in einem höherem Niveau als als demjenigen des höchsten Punktes eines der Körper, die sich auf dem Streckenabschnitt bewegen können, gelegen ist,
in dem Abbild (11) des Streckenabschnitts die Bildpunkte (15, 16) der beiden Objektpunkte zu identifizieren, wenn es keinen Körper (1) auf dem Streckenabschnitt (4) gibt, und
die auf den beiden Bildpunkten (15, 16) erhaltene Licht-Intensität zu vergleichen, wobei ein Helligkeitsunterschied ungleich Null einer Vermutung über die Abwesenheit eines Körpers (1) auf dem Streckenabschnitt (4) entspricht, ein Helligkeitsunterschied im wesentlichen gleich Null einer Vermutung über die Anwesenheit eines Körpers auf dem Streckenabschnitt entspricht, zwischen den Objektpunkten und den Bildpunkten.

2. Verfahren nach Anspruch 1, dadurch gekennzeichnet, daß in dem Abbild (11) des Streckenabschnitts (4) die Identifikation der Bilder der beiden Objektpunkte (5, 6), wenn der Streckenabschnitt (4) zwei Zonen von Punkten (18, 38) aufweist, die eine unterschiedliche Helligkeit aufweisen, und wenn die beiden Objektpunkte (5, 6) jeweils zu den beiden Zonen gehören, dadurch erhalten wird, daß die Abbild-Linie (17) der Geraden (7) bestimmt wird, welche von den beiden Objektpunkten definiert ist, wenn es keinen Körper (1) auf dem Streckenabschnitt (4) gibt, die von einem ersten Bildpunkt (16) dieser Abbild-Linie erhaltene Lichtmenge mit derjenigen verglichen wird, die von wenigstens einem zweiten Bildpunkt (15) dieser selben Linie erhalten wird, wobei der Abstand, der diese beiden ersten und zweiten Bildpunkte trennt, geringer ist als die Breite (50) der Abbildung (51) eines Körpers, und dieser Vergleich so oft wie notwendig wiederholt wird, um wenigstens zwei Bildpunkte (15, 16) zu finden, die einen Helligkeitsunterschied aufweisen.

3. Verfahren nach Anspruch 2, dadurch gekennzeichnet, daß es ferner darin besteht, auf der Abbild-Linie (17) der Geraden (7) die von dem ersten Bildpunkt (16) dieser Abbild-Linie erhaltene Lichtmenge mit derjenigen zu vergleichen, die von einem dritten Bildpunkt (19) dieser selben Linie erhalten wurde, wobei die zweiten (15) und dritten (19) Bildpunkte den ersten Bildpunkt (16) umgeben, und diesen Vergleich so oft wie notwendig zu wiederholen, um wenigstens einen Bildmittelpunkt (16) zu finden, der von den beiden Bildpunkten (15, 19) umgeben ist und der eine von derjenigen dieser beiden ihn umgebenden Bildpunkte unterschiedliche Helligkeit aufweist.

4. Verfahren nach einem der Ansprüche 2 oder 3, dadurch gekennzeichnet, daß es darin besteht, mehrere Gruppen von wenigstens zwei Bildpunkten zu bestimmen, wobei jede Gruppe zu der Abbild-Linie (17, 21, 22) einer von zwei Objektpunkten definierten Geraden (7) gehört und der Abstand, der die beiden äußeren Abbild-Linien (17, 22) trennt, geringer ist als die Länge (52) des Abbildes (51) der Körper, die in Bewegungsrichtung eine Mindestlänge (30) für Körper, die sich auf dem Streckenabschnitt (4) bewegen können, aufweisen.

5. Verfahren nach einem der Ansprüche 2 bis 4, dadurch gekennzeichnet, daß es darin besteht, ein Abbild des Streckenabschnitts (4) auf dem Auftreffort (12) einer Videokamera (29) zu erzeugen.

## Claims

1. A method of determining the occupancy state of a portion of path (4) suitable for being travelled along by bodies (1) of any kind and illuminated by a light source, the method being characterized by the fact that said path portion includes at least two object points (5, 6) defining a straight line (7) substantially perpendicular to the direction (8) of displacement of said bodies along said path portion, said two object points being spaced apart by a distance smaller than the width of said bodies and presenting a mutual difference in luminosity, the method consisting in:
forming an image (11) of said path portion (4) in a plane situated at a level higher than the highest point of any one of said bodies suitable for moving along said path portion;
in the image (11) of said path portion, identifying image points (15, 16) corresponding to said two object points when there is no body (1) on said path portion (4); and
comparing the light intensities received at said two image points (15, 16), with a non-zero difference in luminosity corresponding to a presumption that no body (1) is present on said path portion (4), and with a substantially zero difference in luminosity corresponding to a presumption that a body is present on said path portion between said object points and said image points.

2. A method according to claim 1, characterized by the fact that when said path portion (4) includes two zones of points (18, 38) of different luminosity, and when said two object points (5, 6) belong respectively to said two zones, images of said two object points (5, 6) are identified in the image (11) of said path portion (4) by determining the image line (17) corresponding to said straight line (7) defined by said two object points when there is no body (1) on said path portion (4), comparing the quantity of light received by a first image point (16) in said image line with the quantity of light received by at least one second image point (15) of the same line, the distance between said first and second image points being less than the width (50) of the image (51) of one of said bodies, and in repeating said comparison as many times as necessary to find at least two image points (15, 16) that present a difference in luminosity.

3. A method according to claim 2, characterized by the fact that, on said image line (17) of said straight line (7), the method consists further in comparing the quantity of light received by the first image point (16) of said image line with the quantity of light received by a third image point (19) of the same line, said second and third image points (15, 19) being on opposite sides of said first image point (16), and in repeating said comparison as often as necessary to find at least one image midpoint (16) having two image points (15, 19) on either side thereof and presenting luminosity that is different from the luminosities of said two image points on either side thereof.

4. A method according to claim 2 or 3, characterized by the fact that it consists in determining a plurality of sets of at least two image points, each set belonging to the image line (17, 21, 22) of one of said straight lines (7) defined by two image points, with the distance between the two extreme image lines (17, 22) being shorter than the length (52) in said displacement direction of the images (51) of bodies that are of minimum length (30) for bodies suitable for moving over said path portion (4).

5. A method according to any one of claims 2 to 4, characterized by the fact that it consists in forming an image of said path portion (4) on the target (12) of a video camera (29).
